# EUROPÄISCHE PATENTSCHRIFT

(11) **EP 1 791 737 B1**
(45) Veröffentlichungstag und Bekanntmachung des Hinweises auf die Patenterteilung: **27.02.2008**
(21) Anmeldenummer: 05786852.3
(22) Anmeldetag: 16.09.2005
(51) Int. Cl.: B60T 7/04, B60T 8/48, B60T 7/10

(54) **BREMSANLAGE FÜR KRAFTFAHRZEUGE**
BRAKING SYSTEM FOR MOTOR VEHICLES
SYSTEME DE FREINAGE POUR VEHICULE

(30) Priorität: 20.09.2004 DE 102004045519; 18.07.2005 DE 102005033449
(43) Veröffentlichungstag der Anmeldung: 06.06.2007
(73) Patentinhaber: EVALOR ANSTALT, 9490 Vaduz (LI)
(72) Erfinder: OTT, Guntram, FL-9490 Neudeln-Vaduz (LI)
(74) Vertreter: Schaumburg, Thoenes, Thurn, Landskron
(86) Internationale Anmeldenummer: PCT/EP2005/010030
(87) Internationale Veröffentlichungsnummer: WO 2006/032417

(56) Entgegenhaltungen:
- DE-A1- 4 109 460
- DE-C1- 4 329 139
- US-A- 5 501 514
- US-A- 5 558 413

## Beschreibung

Die Erfindung betrifft eine Bremsanlage für Kraftfahrzeuge, umfassend eine hydraulische Betriebsbremse mit zwei getrennten Leitungskreisen, die einen Hauptbremszylinder über eine Antiblockiereinrichtung mit den Fahrzeugrädern zugeordneten Bremseinrichtungen verbinden, und eine Feststellbremse.

Eine Bremsanlage für Kraftfahrzeuge gemäß dem Oberbegriff der Anspruchs 1 ist aus der US 5558413 bekannt.

Es sind schon zahlreiche Versuche unternommen worden, die Feststellbremse in die übliche hydraulische Betriebsbremsanlage zu integrieren. So ist aus der DE 102 36 686 eine Bremszange zum Übergreifen einer mit einem Fahrzeugrad drehfest verbundenen Bremsscheibe bekannt, umfassend ein Gehäuse, eine Kolbenanordnung mit einem in dem Gehäuse verschiebbar geführten ersten Kolben, der durch eine Betriebsbremseinrichtung des Fahrzeugs parallel zur Scheibenachse verstellbar ist, und mit einem in dem Gehäuse parallel zur Scheibenachse verstellbaren zweiten Kolben, der auf einen zur Anlage an der Bremsscheibe bestimmten Bremsbelag wirkt, wobei die beiden Kolben zwischen sich einen Druckraum einschließen, der über einen Anschlusskanal mit dem Druckmittelkreis einer Feststellbremse des Fahrzeuges verbindbar ist. Wird über ein Steuerventil Druckmittel in den Druckraum zwischen den beiden Kolben geleitet, wird nur der zweite Kolben bewegt und damit die Feststellbremse betätigt. Soll die Betriebsbremse betätigt werden, wird der Druck in dem Druckraum über das Steuerventil eingesperrt, so dass sich der erste und der zweite Kolben synchron zusammen mit der zwischen ihnen eingesperrten Fluidsäule bewegen und die Bremse betätigen. Diese Lösung führt zu einem erhöhten Aufwand an jeder Bremseinrichtung, d.h. an jedem gebremsten Fahrzeugrad.

Der Erfindung liegt die Aufgabe zugrunde, bei einer Bremsanlage der eingangs genannten Art eine Integration der Feststellbremse mit geringem zusätzlichen Aufwand zu ermöglichen.

Diese Aufgabe wird erfindungsgemäß dadurch gelöst, dass in mindestens einem der Leitungskreise zwischen der Antiblockiereinrichtung und dem Hauptbremszylinder ein Hilfszylinder angeordnet ist, der über eine erste Anschlussöffnung und einen ersten Leitungsabschnitt mit dem Hauptbremszylinder und über eine zweite Anschlussöffnung und einen zweiten Leitungsabschnitt mit der Antiblockiereinrichtung verbunden ist und der einen durch eine Betätigungseinrichtung verschiebbaren Hilfskolben enthält, der bei seiner Verschiebung über die Flüssigkeitssäule in dem Leitungskreis auf die Bremseinrichtungen einwirkt, und dass ein Ventil zum Absperren der Leitungsverbindung zwischen dem Hauptbremszylinder und den jeweiligen Bremseinrichtungen vorgesehen ist.

Durch Absperren der Leitungsverbindung zwischen dem Hauptbremszylinder und den Bremseinrichtungen und durch Betätigen des Hilfskolbens im Sinne einer Druckerhöhung an der Bremseinrichtung kann über die Antiblockiereinrichtung an allen an den betreffenden Leitungskreisen angeschlossenen Rädern die jeweilige Bremseinrichtung betätigt werden. Im Gegensatz zu der früheren Lösung benötigt man also nur einen einzigen Hilfszylinder und einen Hilfskolben in dem Leitungskreis zur Betätigung der Feststellbremse an den dem Leitungskreis angeschlossenen Rädern. Zudem kann dieser Hilfszylinder an einer Stelle eingebaut werden, wo mehr Platz zur Verfügung steht als in den hinsichtlich ihres Platzbedarfes sehr eingeschränkten Bremszangen. Insgesamt wird dadurch der Aufwand für die Integration der Feststellbremse in die hydraulische Betriebsbremsanlage erheblich verringert und das Gewicht der Bremszangen reduziert.

Vorzugsweise ist in jedem Leitungskreis ein Hilfszylinder angeordnet, so dass sämtliche Räder des Fahrzeuges über die Feststellbremse gebremst werden können. Dies hat den Vorzug, dass der erforderliche Bremsdruck deutlich gesenkt werden kann, was wiederum zur Verringerung des Aufwandes für die auf die Hilfskolben einwirkenden Betätigungseinrichtungen führt.

Die beiden Anschlussöffnungen des Hilfszylinders können so angeordnet sein, dass die Endstellungen des Hilfskolbens axial zwischen den beiden Anschlussöffnungen liegen, wobei der Hilfskolben eine axiale Durchtrittsöffnung für die Bremsflüssigkeit hat, die durch das Ventil im Hilfskolben bei einer Verschiebung des Hilfskolbens geöffnet oder verschlossen werden kann.

Bei einer bevorzugten Ausführungsform sind die Anschlussöffnungen derart angeordnet, dass sie in einer dem Lösen der Bremse entsprechenden Endstellung des Hilfskolbens miteinander in Fluidverbindung stehen und dass die Fluidverbindung in einer der Ausübung eines Bremsdruckes entsprechenden Endstellung des Hilfskolbens durch die Wand desselben Hilfskolbens unterbrechbar ist.

Ist in jedem Leitungskreis ein Hilfszylinder angeordnet, so können die Hilfskolben der beiden Hilfszylinder über eine gemeinsame Betätigungseinrichtung oder aber auch getrennt über eigene Betätigungseinrichtungen verstellbar sein. Die Betätigung der Hilfskolben kann elektromechanisch, mechanisch, über ein Druckfluid, d.h. hydraulisch oder pneumatisch, oder auch fluidmechanisch erfolgen. In letzterem Fall hat die Betätigungseinrichtung bei einer bevorzugten Lösung einen Betätigungszylinder mit einem Betätigungskolben, der mit dem Hilfskolben gekoppelt ist und der durch eine Feder in Richtung auf seine einer Bremsbetätigung entsprechende Betriebsstellung vorgespannt und durch ein Druckfluid in seine einem Lösen der Bremse entsprechende Ruhestellung rückstellbar ist. Diese Ausführungsform hat den Vorzug, dass sie bei einem Druckabfall des Druckfluides automatisch durch die Feder betätigt wird und dass für das Halten der Feststellbremse keine Energiezufuhr benötigt wird.

Für das Zuführen des Druckfluides zum Betätigungszylinder ist dieser zweckmäßigerweise über eine mindestens ein Betätigungsventil enthaltende Druckleitung an einen Druckfluidbehälter angeschlossen, der in an sich bekannter Weise durch eine Pumpe ständig auf einem gewissen Druck gehalten wird. Durch Betätigung des Betätigungsventiles kann die Feststellbremse angezogen oder gelöst werden.

Weitere vorteilhafte Ausführungen der Erfindung sind in den Unteransprüchen angegeben.

Die folgende Beschreibung erläutert in Verbindung mit den beigefügten Figuren die Erfindung anhand von Ausführungsbeispielen. Es zeigen:
- Fig.1: eine schematische Darstellung einer erfindungsgemäßen Bremsanlage,
- Fig.2: einen die Achse enthaltenden Schnitt durch einen Hilfszylinder und den zugehörigen Betätigungszylinder,
- Fig.3 und 4: den Fig.1 und 2 entsprechende Darstellungen einer abgewandelten Ausführungsform der Erfindung,
- Fig.5: eine der Fig.1 entsprechende Darstellung einer weiteren Ausführungsform der Erfindung,
- Fig.6: eine schematische Schnittdarstellung des Hilfskolbens allein und
- Fig.7: eine vergrößerte Darstellung der Leitungsanschlüsse der in Fig.5 dargestellten Hilfszylinder.

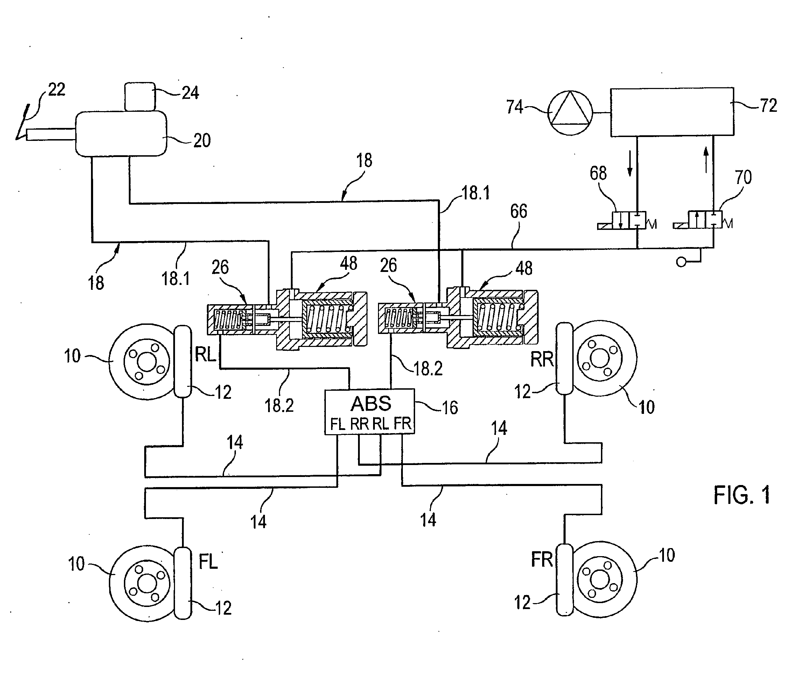

In der Fig.1 sind jeweils mit 10 vier Bremsscheiben von vier Rädern eines Kraftfahrzeuges bezeichnet, denen die Buchstaben FL (vorne links), FR (vorne rechts), RL (hinten links) und RR (hinten rechts) zugeordnet sind. Jede Bremsscheibe 10 arbeitet mit einer Bremszange 12 zusammen, die jeweils über eine Leitung 14 mit dem entsprechenden Anschluss eines Antiblockiersystems 16 (ABS) verbunden ist. Das ABS 16 ist über getrennte Bremsleitungen 18 mit einem Hauptbremszylinder 20 verbunden, der über ein nur schematisch dargestelltes Bremspedal 22 betätigbar ist und mit einem Bremsflüssigkeitsbehälter 24 in Verbindung steht. Eine der Bremsleitungen 18 bildet zusammen mit den zu den Bremszangen FL und RR führenden Leitungen 14 einen ersten Leitungskreis und die andere Bremsleitung 18 bildet zusammen mit den zu den Bremszangen RL und FR führenden Leitungen 14 einen zweiten Bremsleitungskreis. Beide Bremsleitungskreise sind vollständig voneinander getrennt. Bei der soweit betriebenen Bremsanlage handelt es sich um eine herkömmliche Betriebsbremsanlage eines Kraftfahrzeuges.

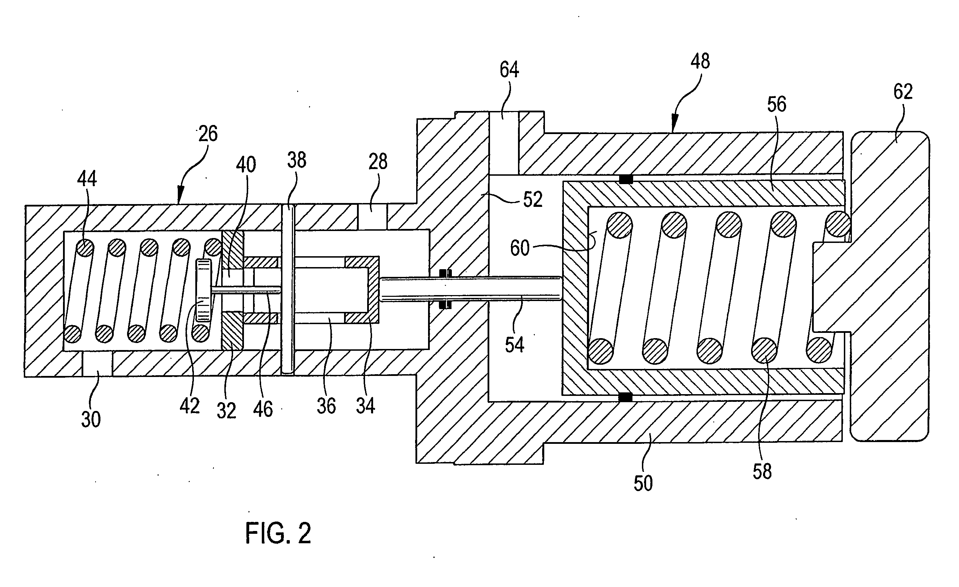

In diese Betriebsbremsanlage ist nun eine Feststellbremse integriert, die in der Weise wirkt, dass ohne eine Betätigung des Hauptbremszylinders 20 ein Bremsdruck auf die Bremszangen 12 ausgeübt und verriegelt werden kann. Hierzu ist in den beiden Bremsleitungen 18 jeweils ein Hilfszylinder 26 angeordnet, der nun anhand der Fig.2 näher erläutert werden soll. Der Hilfszylinder 26 hat nahe seinem einen Ende einen Anschluss 28 zur Verbindung mit einem zum Hauptbremszylinder 20 führenden Leitungsabschnitt 18.1 und nahe seinem anderen Ende einen Anschluss 30 zur Verbindung mit einem zum ABS 16 führenden Leitungsabschnitt 18.2 der Bremsleitung 18. In dem Hilfszylinder 26 ist zwischen den beiden Anschlüssen 28 und 30 ein Hilfskolben 32 verschiebbar gelagert, der mit einer Kolbenstange 34 verbunden ist. Die Kolbenstange 34 ist rohrförmig ausgebildet und hat zwei einander diametral gegenüberliegende achsparallele Schlitze 36, durch die ein diametral gerichteter, in den Wänden des Hilfszylinders 26 festgelegter Stift verläuft, der den Verschiebeweg der Kolbenstange 34 und des Hilfskolbens 32 begrenzt.

Der Hilfskolben 32 hat eine mittige Öffnung 40, die durch einen Ventilteller 42 verschließbar ist. Der Hilfskolben 32 wird durch eine Schraubendruckfeder 44, die sich einerseits an der Deckfläche des Hilfszylinders 26 und andererseits an dem Hilfskolben 32 abstützt, in der Fig.2 nach rechts vorgespannt. Der Ventilteller 42 ist mit einem die Öffnung 40 in dem Hilfskolben 32 durchsetzenden Stößel 46 verbunden, dessen Länge so bemessen ist, dass der Stößel 46 gegen den Stift 38 stößt und den Ventilteller 42 von dem Hilfskolben 32 abhebt, wenn sich der Hilfskolben 32 in der in der Fig.2 dargestellten rechten Endstellung befindet. In dieser Stellung kann also Bremsflüssigkeit von dem Anschluss 28 durch den Hilfszylinder 26, die Schlitze 36 in der Kolbenstange 34, die Öffnung 40 in dem Kolben 32 zum Anschluss 30 strömen und umgekehrt. Die Abschnitte 18.1 und 18.2 der Bremsleitung 18 sind also in dieser Stellung des Hilfskolbens 32 miteinander verbunden. Die Betriebsbremse kann in dieser Stellung des Hilfskolbens 32 in herkömmlicher Weise benutzt werden.

Der Hilfskolben 32 ist über eine Betätigungsvorrichtung 48 verstellbar, wie dies im folgenden erläutert werden soll. Die Betätigungsvorrichtung 48 umfasst einen Betätigungszylinder 50, der im dargestellten Ausführungsbeispiel geteilt mit dem Hilfszylinder 26 ausgebildet, von diesem aber durch eine Zwischenwand 52 getrennt ist. Durch diese Zwischenwand 52 verläuft ein Stößel 54, der mit seinem einen Ende an dem geschlossenen Ende der Kolbenstange 34 anliegt und mit seinem anderen Ende an einem in dem Betätigungszylinder 50 verschiebbar gelagerten Betätigungskolben 56 gekoppelt ist. Der Betätigungskolben 56 wird durch eine Schraubendruckfeder 58 oder wahlweise eine Tellerfeder, die sich einerseits am Kolbenboden 60 und andererseits an einem Zylinderdeckel 62 des Betätigungszylinders 50 abstützt, in Richtung auf die Zwischenwand 52 vorgespannt. Nahe der Zwischenwand 52 hat der Betätigungszylinder 50 einen Anschluss 64 für eine Druckfluidleitung 66 (Fig.1), die über zwei Ventile 68, 70 mit einem Druckfluidtank 72 verbunden ist, der über eine Pumpe 74 mit Druck beaufschlagt werden kann. Über die Ventile 68 und 70 und die Fluidleitung 66 kann Druckfluid in den Betätigungszylinder 50 eingeführt bzw. aus dem Betätigungszylinder 50 abgeführt werden. In dem ersteren Fall wird der Betätigungskolben 56 in die in der Fig.2 dargestellte Stellung verstellt bzw. in dieser Stellung gegen die Vorspannung der Schraubendruckfeder 58 gehalten. Wird dagegen das Ventil 70 geöffnet, so dass Druckfluid aus dem Betätigungszylinder 50 entweichen kann, wird der Betätigungskolben 56 entlastet und durch die Schraubendruckfeder 58 in der Fig.2 nach links in Richtung auf die Zwischenwand 52 verschoben. Dabei schiebt der Betätigungskolben 56 über den Stößel 54 und die Kolbenstange 34 den Hilfskolben 32 in der Fig.2 nach links gegen die Vorspannung der Schraubendruckfeder 44. Dies führt dazu, dass der Ventilteller 42 durch eine nicht dargestellte Feder gegen den Hilfskolben 32 gedrückt werden kann, da der Ventilteller 42 nicht mehr über den Stößel 46 von dem Hilfskolben 32 abgehoben wird. Dadurch wird die Öffnung 40 in dem Hilfskolben 32 verschlossen und es wird ein Bremsdruck in dem Leitungsabschnitt 18.2 sowie über das ABS 16 in den zugehörigen Leitungen 14 aufgebaut und aufrechterhalten. Damit ist die Feststellbremse angezogen. Der Bremsdruck bleibt eingesperrt und wird so ohne weitere Energiezufuhr aufrechterhalten. Die Feststellbremse wird erst dadurch wieder gelöst, dass das Ventil 68 auf Durchfluss geschaltet wird und über die Druckfluidleitung 66 Druckfluid in den Betätigungszylinder 50 geleitet wird, wodurch der Betätigungskolben 56 in die in Fig.2 dargestellte Stellung verschoben wird. Der Hilfskolben 32 folgt unter der Wirkung der Schraubendruckfeder 44, bis der Ventilteller 42 von der Öffnung 40 abhebt und Druckfluid aus den Bremszangen 12 über die Leitungsabschnitte 14, das ABS und die Bremsleitungen 18 entweichen kann.

Man erkennt, dass die Feststellbremse nur einen Hilfszylinder pro Leitungskreis benötigt, unabhängig von der Anzahl der an den jeweiligen Leitungskreis angeschlossenen Bremseinrichtungen. Zudem muss im Gegensatz zu den bekannten Lösungen der Hilfszylinder bzw. der jeweilige Hilfskolben nicht in der jeweiligen Bremszange untergebracht werden.

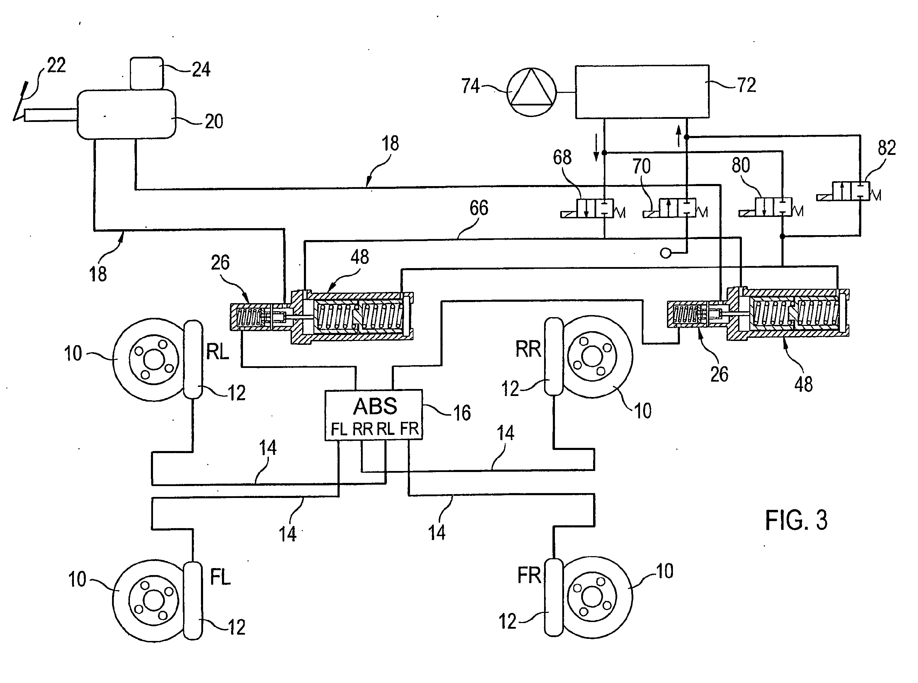

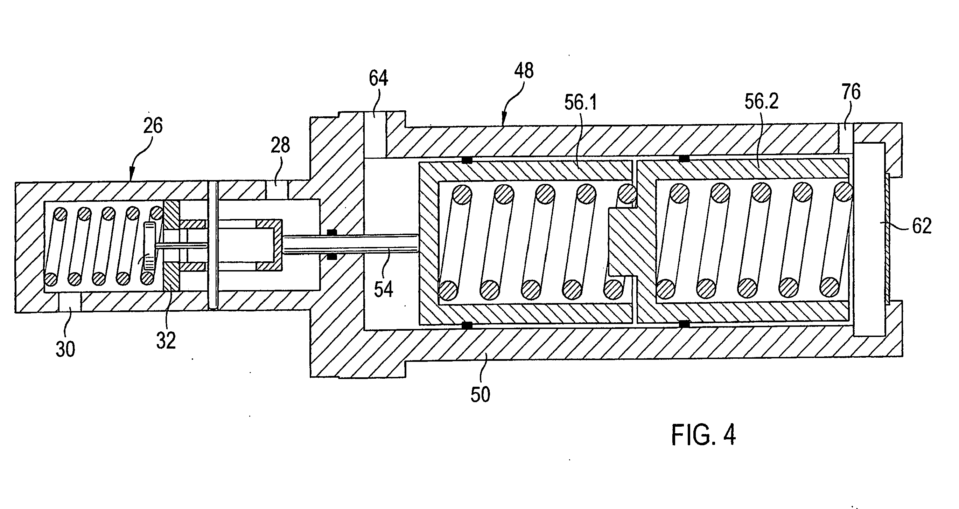

Das in den Fig.3 und 4 dargestellte Ausführungsbeispiel unterscheidet sich von der Lösung gemäß den Fig.1 und 2 nur durch die abgewandelte Ausführungsform der Betätigungseinrichtung. Gleiche Teile sind wieder mit gleichen Bezugszeichen versehen. Statt eines einzelnen Betätigungskolbens sind bei der Ausführungsform gemäß den Fig.3 und 4 zwei Betätigungskolben 56.1 und 56.2 in dem Betätigungszylinder 56 angeordnet. Ferner hat der Betätigungszylinder 50 einen weiteren Anschluss 76, der über eine weitere Druckfluidleitung 78 (Fig.3) und zwei weitere Ventile 80 und 82 mit dem Druckfluidtank 72 verbunden ist. Auf diese Weise kann auch die Rückseite des Kolbens 56.2 über den Anschluss 76 mit Druck beaufschlagt werden, so dass die Kolben 56.1 und 56.2 in der Bremsstellung der Feststellbremse nicht nur durch die Federkraft der Schraubendruckfedern 58, sondern auch durch den Druck des Hydraulikfluides von dem Druckfluidtank 72 gehalten werden. Dadurch kann auf einfache Weise ein höherer Bremsdruck erreicht werden, wenn dieser erforderlich sein sollte. Im übrigen arbeitet aber die Anordnung gemäß den Fig.3 und 4 in derselben Weise wie die Anordnung gemäß den Fig.1 und 2. Es ist noch zu betonen, dass die beiden Leitungskreise der Bremsanlage vollständig identisch aufgebaut sind, also auch die beiden Hilfszylinder und Betätigungseinrichtungen in den beiden Bremsleitungen 18 identisch sind.

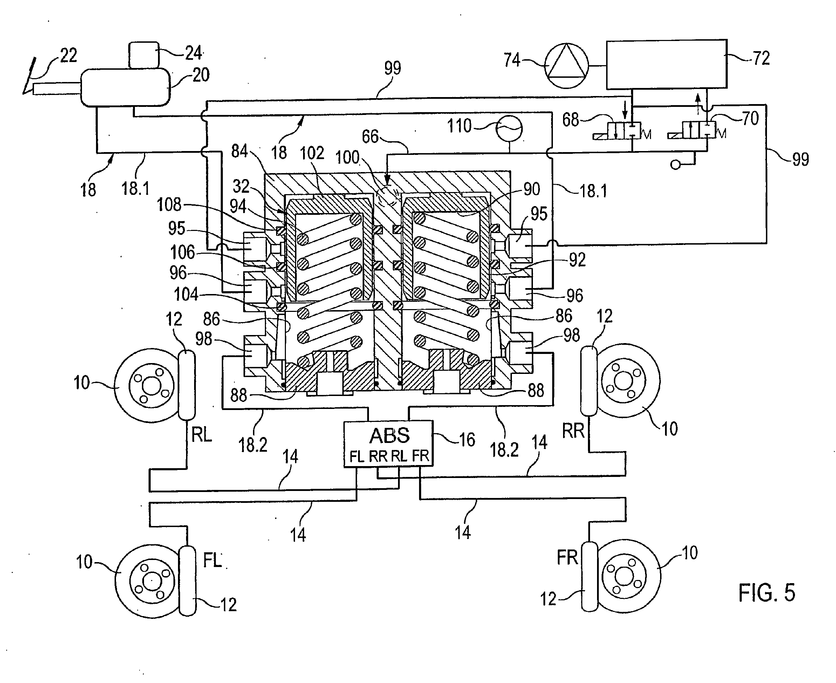

Die in den Fig.5 bis 7 dargestellte Ausführungsform zeichnet sich durch ihren besonders einfachen Aufbau aus. Es werden für gleiche Teile wieder gleiche Bezugszeichen verwendet.

Anstelle zweier getrennter Hilfszylinder 26 ist ein gemeinsames Gehäuse 84 vorgesehen, das zwei zylindrische Bohrungen 86 hat, die jeweils durch ein Verschlusselement 88 verschlossen und zur Aufnahme des Hilfskolbens 32 bestimmt sind. Der Hilfskolben 32 ist topfförmig mit einem Kolbenboden 90 und einer Kolbenwand 92 ausgebildet. In den hohlen Hilfskolben 32 ist eine Schraubendruckfeder 94 eingesetzt, die sich einerseits an dem jeweiligen Verschlusselement 88 und andererseits an der Innenseite des Topfbodens 90 abstützt und den Hilfskolben 32 in Richtung auf den jeweiligen Boden der zylindrischen Bohrung 86 vorspannt.

Jede Zylinderbohrung 86 hat drei axial beabstandete Anschlussöffnungen 95, 96 bzw. 98. Die mittlere Anschlussöffnung 96 ist jeweils an den Leitungsabschnitt 18.1 angeschlossen, der die Zylinderbohrung 86 mit dem Hauptbremszylinder 20 verbindet. Die dem jeweiligen Verschlusselement 88 nahegelegene Anschlussöffnung 98 ist über den Leitungsabschnitt 18.2 an die ABS-Einrichtung 16 angeschlossen. Die dem Boden der Zylinderbohrung 86 nahegelegene Anschlussöffnung 95 ist über eine Leitung 99 direkt mit dem Vorratsbehälter 72 verbunden.

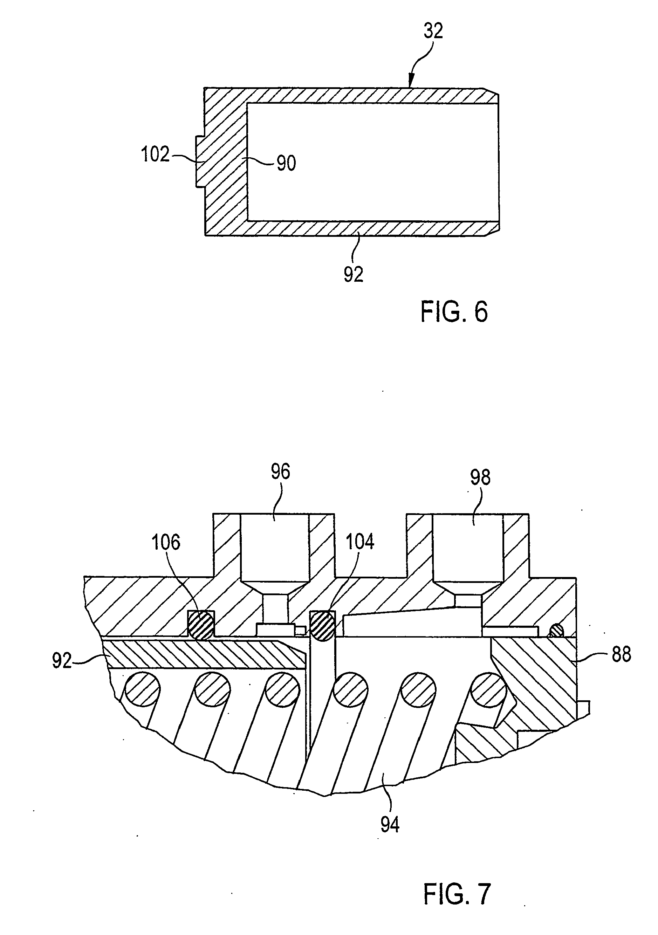

Der jeweilige Raum zwischen dem Boden der zylindrischen Bohrung 86 und dem Kolbenboden 90 ist über einen gemeinsamen Anschluss 100 mit der Druckfluidleitung 66 verbunden. Wie man insbesondere in Fig.6 erkennt, hat der jeweilige Kolbenboden 90 des Hilfskolbens 32 auf seiner Außenseite eine Erhebung 102, so dass über den Anschluss 100 einströmendes Druckfluid zwischen den Boden der jeweiligen Zylinderbohrung 86 und den Boden 90 des Hilfskolbens 32 gelangen kann, auch wenn dieser sich in der in der Fig.5 dargestellten Endstellung befindet. Somit können die Hilfskolben 32 durch die Zufuhr von Druckfluid über die Druckfluidleitung 66 gegen die Vorspannkraft der Schraubendruckfeder 94 in Richtung auf das jeweilige Verschlusselement 88 bewegt werden.

Zwischen den beiden Anschlussöffnungen 96 und 98 ist in der Wand der Zylinderbohrung 86 jeweils eine Ringnut ausgebildet, in der ein erster Dichtungsring 104 angeordnet ist. Zwischen den Anschlussöffnungen 95 und 96 einerseits und der Anschlussöffnung 95 und dem Boden der Zylinderbohrung 86 andererseits sind in entsprechenden Ringnuten ein zweiter und ein dritter Dichtungsring 106 bzw. 108 angeordnet.

Die axiale Länge des Hilfskolbens 32 ist jeweils so bemessen, dass er in der in der Fig.5 dargestellten Endstellung die Anschlussöffnung 96 zumindest teilweise freigibt, so dass die Anschlussöffnungen 96 und 98 über den Innenraum der Zylinderbohrung 86 in Fluidverbindung stehen. Wird der jeweilige Hilfskolben 32 durch die Zufuhr von Druckfluid über die Leitung 66 in Richtung auf das jeweilige Verschlusselement 88 verschoben, so überfährt der freie Rand der Kolbenwand 92 den Dichtungsring 106 und unterbricht damit die Fluidverbindung zwischen den jeweiligen Anschlussöffnungen 96 und 98. Somit kann in dem jeweiligen Leitungskreis der Bremsdruck aufgebaut bzw. ein entsprechendes Bremssignal an das ABS gegeben werden. Durch Schließen der Ventile 68 bzw. 70 wird der Druck in der Druckfluidleitung 66 eingesperrt, so dass auch die Hilfskolben 32 in ihrer den Bremsdruck bzw. das Bremssignal erzeugenden Stellung fixiert werden. Damit der jeweilige Hilfskolben 32 bei seiner Verschiebung nicht an dem Dichtungsring 106 hängen bleibt, ist er im Bereich seines dem jeweiligen Verschlusselement 88 zugewandten freien Randes an der Außenseite abgeschrägt, wie dies deutlich in den Fig.6 und 7 zu erkennen ist. Der Schrägungswinkel beträgt etwa 20° relativ zur Bohrungswand. Auf diese Weise kann die Feststellbremse unabhängig von der Betätigung des Hauptbremszylinders betätigt werden.

Bei einer Abkühlung oder Erwärmung des Druckfluides kann sich dessen Volumen erheblich verändern. Dies führt zu einer Verschiebung der Hilfskolben in den Zylinderbohrungen 86. Um diese Volumen- und damit auch Druckänderung auszugleichen, ist mit der Druckfluidleitung 66 ein Druckspeicher 108 verbunden, der als Federspeicher, Membranspeicher oder dergleichen ausgebildet sein kann.

Sollte sich aufgrund einer sehr starken Abkühlung der Anlage oder aufgrund einer Leckage einer der Hilfskolben soweit verschieben, dass die jeweilige Anschlussöffnung 95 durch die rückwärtige, d.h. die dem Boden der Zylinderbohrung 86 zugewandte Kante des Hilfskolbens 32 freigegeben wird, so wird der Raum zwischen dem Kolbenboden und dem Boden der Zylinderbohrung 86 unmittelbar mit dem Vorratsbehälter 72 verbunden, so dass der Druck auf den Hilfskolben und damit auch der von ihm erzeugte Bremsdruck aufrechterhalten werden. Sollte ich die Anlage wieder erwärmen, verschiebt sich der Hilfskolben wieder nach hinten und verschließt die Anschlussöffnung 95. Die dadurch bewirkte Volumenänderung in der Druckfluidleitung 66 wird dann wiederum von dem Druckspeicher 108 aufgenomrnen.

Damit bei dieser Bewegung der Dichtungsring 108 nicht beschädigt wird, ist das rückwärtige Kolbenende ebenso abgeschrägt, wie das vordere Kolbenende, was insbesondere in der Fig.6 deutlich zu erkennen ist.

Sollte der Fall eintreten, dass die Anschlussöffnung 95 offen ist und man gleichzeitig versucht, die Feststellbremse mit dem Auslassventil 70 zu öffnen, müsste man hierzu auch den Druck aus dem Vorratsbehälter 72 ablassen. Das wiederum würde bedeuten, dass in diesem Augenblick bei einer neuerlichen Betätigung der Feststellbremse kein Bremsdruck zur Verfügung stünde. Um dies zu verhindern, ist in dem Zulauf zu der Anschlussöffnung 95 eine Blende oder Drossel angeordnet, deren Durchmesser so gering ist, dass das Druckfluid wesentlich langsamer durch die Anschlussöffnung 95 in die Zylinderbohrung 86 einströmt, als Druckfluid über den Anschluss 100 und die Druckfluidleitung 66 durch das Auslassventil 70 abfließen kann. Damit kann sich der Hilfskolben unter der Wirkung der Feder 94 in Richtung auf den Boden der Zylinderbohrung 86 bewegen, wobei die Anschlussöffnung 95 wiederum verschlossen wird. Dann kann der eingesperrte Druck ganz normal über das Auslassventil 70 dem Vorratsbehälter 72 zugeführt werden.

Die in den Fig.5 bis 7 dargestellte Ausführungsform hat den Vorteil, dass das zum Absperren der jeweiligen Leitungsverbindung zwischen Hauptbremszylinder und ABS vorgesehene Ventil kein eigenes Ventilelement hat, sondern von der Anschlussöffnung 96 und der Kolbenwand des Hilfskolbens 32 gebildet wird. Damit entfällt das bei der Ausführungsform gemäß den Fig.1 bis 4 vorgesehene bewegliche Ventilelement 42. Ferner wird der Hilfskolben 32 zu seiner Verstellung direkt mit Druck beaufschlagt, so dass ein eigener Betätigungszylinder 48 entfallen kann, der bei der Lösung gemäß den Fig.1 bis 4 vorgesehen ist.

## Patentansprüche

1. Bremsanlage für Kraftfahrzeuge, umfassend eine hydraulische Betriebsbremse mit zwei getrennten Leitungskreisen (14, 18), die einen Hauptbremszylinder (20) über eine Antiblockiereinrichtung (16) mit den Fahrzeugrädern zugeordneten Bremseinrichtungen (12) verbinden, und eine hydraulisch wirkende Feststellbremse, **dadurch gekennzeichnet, dass** in mindestens einem der Leitungskreise. (18) zwischen der Antiblockiereinrichtung (16) und dem Hauptbremszylinder (20) ein Hilfszylinder (26) angeordnet ist, der über eine erste Anschlussöffnung (96) und einen ersten Leitungsabschnitt (18.1) mit dem Hauptbremszylinder (20) und über eine zweite Anschlussöffnung (98) und einen zweiten Leitungsabschnitt (18.2) mit der Antiblockiereinrichtung (16) verbunden ist und der einen durch eine Betätigungseinrichtung (48) verschiebbaren Hilfskolben (32) enthält, der bei seiner Verschiebung zum Aufbauen eines Feststellbremsdruckes über die Flüssigkeitssäule in dem Leitungskreis auf die Bremseinrichtungen (12) einwirkt und in einer dem Anziehen der Feststellbremse entsprechenden Stellung feststellbar ist, und dass ein Ventil (42) zum Absperren der Leitungsverbindung zwischen dem Hauptbremszylinder (20) und den jeweiligen Bremseinrichtungen (12) vorgesehen ist.

2. Bremsanlage nach Anspruch 1, **dadurch gekennzeichnet, dass** die beiden Anschlussöffnungen des Hilfszylinders (26) so angeordnet sind, dass die Endstellungen des Hilfskolbens axial zwischen den beiden Anschlussöffnungen liegen, wobei der Hilfskolben (32) eine axiale Durchtrittsöffnung (40) für die Bremsflüssigkeit hat, die durch das Ventil (42) im Hilfskolben (32) bei einer Verschiebung des Hilfskolbens (32) geöffnet oder verschlossen werden kann.

3. Bremsanlage nach Anspruch 1, **dadurch gekennzeichnet, dass** die beiden Anschlussöffnungen (96, 98) derart angeordnet sind, dass sie in einer dem Lösen der Bremse entsprechenden Endstellung des Hilfskolbens (32) miteinander in Fluidverbindung stehen und dass die Fluidverbindung in einer der Ausübung eines Bremsdruckes entsprechenden Endstellung des Hilfskolbens (32) durch die Wand (92) desselben Hilfskolbens unterbrechbar ist.

4. Bremsanlage nach einem der Ansprüche 1 bis 3, **dadurch gekennzeichnet, dass** in jedem Leitungskreis (18.1, 18.2) ein Hilfszylinder (26) angeordnet ist.

5. Bremsanlage nach Anspruch 4, **dadurch gekennzeichnet, dass** die Hilfskolben (32) der beiden Hilfszylinder (26) über eine gemeinsame Betätigungseinrichtung verstellbar sind.

6. Bremsanlage nach Anspruch 4, **dadurch gekennzeichnet, dass** jeder Hilfskolben (32) durch eine eigene Betätigungsvorrichtung (48) verstellbar ist.

7. Bremsanlage nach einem der Ansprüche 1 bis 6, **dadurch gekennzeichnet, dass** die Betätigungseinrichtung als elektromechanische Betätigungseinrichtung ausgebildet ist.

8. Bremsanlage nach einem der Ansprüche 1 bis 6, **dadurch gekennzeichnet, dass** die Betätigungseinrichtung als Druckmittel-Betätigungseinrichtung ausgebildet ist.

9. Bremsanlage nach einem der Ansprüche 1 bis 6, **dadurch gekennzeichnet, dass** die Betätigungseinrichtung als mechanische Betätigungseinrichtung ausgebildet ist.

10. Bremsanlage nach einem der Ansprüche 1 bis 6, **dadurch gekennzeichnet, dass** die Betätigungseinrichtung als fluidmechanische Betätigungsvorrichtung ausgebildet ist.

11. Bremsanlage nach Anspruch 10, **dadurch gekennzeichnet, dass** die Betätigungseinrichtung (48) einen Betätigungszylinder (50) mit einem Betätigungskolben (56) hat, der mit dem Hilfskolben (32) des Hilfszylinders (26) gekoppelt ist und der durch eine Feder (58) in Richtung auf seine einer Bremsbetätigung entsprechende Betriebsstellung vorgespannt und durch ein Druckfluid in seine einem Lösen der Bremse entsprechenden Ruhestellung rückstellbar ist.

12. Bremsanlage nach Anspruch 8, **dadurch gekennzeichnet, dass** der Hilfskolb en durch eine Feder (94) in seine eine Endstellung vorgespannt und durch Beaufschlagung mit einem Druckmittel gegen die Federvorspannung in seine andere Endstellung verschiebbar ist.

13. Bremsanlage nach Anspruch 11 oder 12, **dadurch gekennzeichnet, dass** der Betätigungszylinder (48) bzw. Hilfszylinder über eine mindestens ein Betätigungsventil (68, 70) enthaltende Druckleitung (66) an einen Druckfluidbehälter (72) angeschlossen ist.

## Claims

1. A braking system for motor vehicles including a hydraulic operating brake with two separate line circuits (14, 18) which connect a main brake cylinder (20) through an anti-locking device (16) with brake devices (12) associated with the vehicle wheels, and a hydraulically operated parking brake, **characterized in that** an auxiliary cylinder (26) is arranged in at least one of the line circuits (18) between the anti-locking device (16) and the main brake cylinder (20), which auxiliary cylinder is connected with the main brake cylinder (20) through a first connection opening (96) and a first line section (18.1) and is connected with the anti-locking device (16) through a second connection opening (98) and a second line section (18.2) and which contains an auxiliary piston (32) shiftable by means of an actuating device (48), which auxiliary piston during its shifting acts through the fluid column in the line circuit on the brake devices (12) to build up a parking break pressure and which auxiliary piston can be locked in a position corresponding to the actuation of the parking brake, and **in that** a valve (42) is provided for a closing of the line connection between the main brake cylinder (20) and the associated brake devices (12).

2. A braking system according to claim 1, **characterized in that** the two connection openings of the auxiliary cylinder (26) are arranged so that the end positions of the auxiliary piston lie axially between the two connection openings, with the auxiliary piston (32) having an axial through opening (40) for the brake fluid, which through opening (40) can be opened or closed by means of the valve (42) in the auxiliary piston (32) by shifting the auxiliary piston (32).

3. A braking system according to claim 1, **characterized in that** the two connection openings (96, 98) are arranged so that they are in fluid connection with one another in the end position of the auxiliary piston (32) corresponding to a release of the brake, and so that said fluid connection can be broken by the wall (92) of the same auxiliary piston in an end position of the auxiliary piston (32) corresponding to the application of the braking pressure.

4. A braking system according to one of claims 1 to 3, **characterized in that** an auxiliary cylinder (26) is arranged in each line circuit (18.1, 18.2).

5. A braking system according to claim 4, **characterized in that** the auxiliary pistons (32) of the two auxiliary cylinders (26) are moveable by way of a common actuating device.

6. A braking system according to claim 4, **characterized in that** each auxiliary piston (32) is moveable by way of its own actuating device (48).

7. A braking system according to one of claims 1 to 6, **characterized in that** the actuating device is formed as an electromechanical actuating device.

8. A braking system according to one of the claims 1 to 6, **characterized in that** the actuating device is formed as a pressure medium actuating device.

9. A braking system according to one of the claims 1 to 6, **characterized in that** the actuating device is formed as a mechanical actuating device.

10. A braking device according to one of the claims 1 to 6, **characterized in that** the actuating device is formed as a fluid-mechanical actuating device.

11. A braking system according to claim 10, **characterized in that** the actuating device (48) has an actuating cylinder (50) with an actuating piston (56) which is coupled with the auxiliary piston (32) of the auxiliary cylinder (26) and which by means of a spring (58) is biased in the direction toward its operating position corresponding to a brake actuation and which by means of a pressure fluid is returnable to its rest position corresponding to a release of the brake.

12. A braking system according to claim 8, **characterized in that** the auxiliary piston is biased by a spring (94) toward its one end position and is shiftable against the biasing of the spring toward its other end position by a pressure medium.

13. A braking system according to claim 11 or 12, **characterized in that** the actuating cylinder (48) or the auxiliary cylinder, respectively, is connected to a pressure-fluid container (72) by means of a pressure line (66) containing at least one actuating valve (68, 70).

## Revendications

1. Système de freinage pour véhicule automobile, comprenant un frein de service hydraulique comportant deux circuits hydrauliques séparés (14, 18), qui relient un cylindre de freinage principal (20) à des dispositifs de freinage (12), associés aux roues du véhicule, par l'intermédiaire d'un dispositif d'antiblocage (16), et un frein de stationnement à action hydraulique, **caractérisé en ce qu'**un cylindre auxiliaire (26) est disposé dans au moins un des circuits hydrauliques (18) entre le dispositif d'antiblocage (16) et le cylindre de freinage principal (20), lequel cylindre auxiliaire est relié au cylindre de freinage principal (20) par une première ouverture de raccordement (96) et une première section hydraulique (18.1), et au dispositif d'antiblocage (16) par une deuxième ouverture de raccordement (98) et une deuxième section hydraulique (18.2), et contient un piston auxiliaire (32) qui peut être déplacé par un actionneur (48), qui agit pendant son déplacement sur les dispositifs de freinage (12) par le biais de la colonne de liquide dans le circuit hydraulique afin de générer une pression de freinage de stationnement, et qui peut être immobilisé dans une position correspondant au serrage du frein de stationnement, et **en ce qu'**un clapet (42) est prévu entre le cylindre de freinage principal (20) et les dispositifs de freinage (12) respectifs afin de fermer la liaison hydraulique.

2. Système de freinage selon la revendication 1, **caractérisé en ce que** les deux ouvertures de raccordement du cylindre auxiliaire (26) sont disposées de telle sorte que les positions d'extrémité du piston auxiliaire sont placées axialement entre les deux ouvertures de raccordement, le piston auxiliaire (32) comportant une ouverture de passage axiale (40) destinée au liquide de frein, laquelle ouverture peut être ouverte ou fermée, pendant un déplacement du piston auxiliaire (32), par le clapet (42) se trouvant dans le piston auxiliaire (32).

3. Système de freinage selon la revendication 1, **caractérisé en ce que** les deux ouvertures de raccordement (96, 98) sont agencées de façon à être en liaison fluidique l'une avec l'autre lorsque le piston auxiliaire (32) est dans une position d'extrémité qui correspond au desserrage du frein, et **en ce que** la liaison fluidique peut être coupée par la paroi (92) du piston auxiliaire (32) lorsque ledit piston auxiliaire se trouve dans une position d'extrémité qui correspond à l'exercice d'une pression de freinage.

4. Système de freinage selon l'une des revendications 1 à 3, **caractérisé en ce qu'**un cylindre auxiliaire (26) est disposé dans chaque circuit hydraulique (18.1, 18.2).

5. Système de freinage selon la revendication 4, **caractérisé en ce que** les pistons auxiliaires (32) des deux cylindres auxiliaires (26) peuvent être déplacés par un actionneur commun.

6. Système de freinage selon la revendication 4, **caractérisé en ce que** chaque piston auxiliaire (32) peut être déplacé par un actionneur propre (48).

7. Système de freinage selon l'une des revendications 1 à 6, **caractérisé en ce que** l'actionneur est conformé en actionneur électromécanique.

8. Système de freinage selon l'une des revendications 1 à 6, **caractérisé en ce que** l'actionneur est conformé en actionneur à moyen de pression.

9. Système de freinage selon l'une des revendications 1 à 6, **caractérisé en ce que** l'actionneur est conformé en actionneur mécanique.

10. Système de freinage selon l'une des revendications 1 à 6, **caractérisé en ce que** l'actionneur est conformé en actionneur mécanique à fluide.

11. Système de freinage selon la revendication 10, **caractérisé en ce que** l'actionneur (48) comprend un cylindre d'actionneur (50) comportant un piston d'actionneur (56) qui est couplé au piston auxiliaire (32) du cylindre auxiliaire (26), qui est précontraint par un ressort en direction de sa position de service correspondant à une commande de freinage, et qui peut être ramené par un fluide sous pression dans sa position de repos correspondant à un desserrage du frein.

12. Système de freinage selon la revendication 8, **caractérisé en ce que** le piston auxiliaire est précontraint par un ressort (94) dans l'une de ses positions d'extrémité, et peut être déplacé par un moyen de pression dans son autre position d'extrémité en s'opposant à la précontrainte exercée par le ressort.

13. Système de freinage selon la revendication 11 ou 12, **caractérisé en ce que** le cylindre de commande (48), resp. le cylindre auxiliaire, est raccordé à un réservoir de fluide sous pression (72) par une conduite sous pression (66) incluant au moins un clapet d'actionneur (68, 70).
